# EUROPEAN PATENT SPECIFICATION

(11) **EP 3 011 812 B1**
(45) Date of publication and mention of the grant of the patent: **23.08.2017**
(21) Application number: 14003590.8
(22) Date of filing: 21.10.2014
(51) Int. Cl.: A01B 13/16

(54) **DEVICE FOR FORMING DAMS FOR RIDGE CROPS**
Vorrichtung zur Herstellung von Dämmen für Dammkulturen
Dispositif pour former des barrages de cultures de crête

(43) Date of publication of application: 27.04.2016
(73) Proprietor: Miedema Landbouwwerktuigenfabriek B.V., 8831 XA Winsum (NL)
(72) Inventor: Meindertsma, Siebe, 9172 NZ Ferwert (NL)
(74) Representative: Hostens, Veerle

(56) References cited:
- GB-A- 1 450 650
- US-A- 2 193 275
- US-A- 2 226 575
- US-A- 3 316 980

## Description

### Field of the invention

The present invention relates to a device for forming dams for ridge crops with the object of limiting the chance of soil erosion.

### Background of the invention

Soil erosion caused by water is a known problem in the case of row crops on fields along slopes or with sloping parts. Row crops are often characterized in that the rows of plants are mutually separated by deeper or shallower furrows oriented parallel to these rows of plants. Relatively deep furrows occur in so-called ridge crops, a particular form of row cultivation, with potato cultivation as the best-known example thereof. Fields with row crops with relatively deep furrows are extra-susceptible to erosion because the water from the ridges accumulates relatively quickly in the furrows.

A known effective method for limiting the chance of soil erosion is to form dams oriented at right angles to the longitudinal direction of the furrows. In known devices soil in the furrow is for this purpose pushed up by a soil working member and released. An example of such a device is shown in GB 2223654. GB 2223654 shows an implement for coupling to the lifting device of an agricultural tractor. The implement comprises at least one paddle wheel incorporated in the implement for rotation about an axis perpendicular to the direction of travel and parallel to the ground surface. The implement is also provided with means for periodically blocking the rotation of the paddle wheel. In the operative phase in which the paddle wheel is blocked, a paddle member penetrates superficially into the soil of the furrow and pushes the dislodged soil forward in the direction of travel. In the operative phase in which the blocking is released, the soil resistance provides for a rotation of the paddle wheel over the just formed dam. This process is repeated by again blocking and unblocking the paddle wheel during the forward movement. A furrow is thus provided with a succession of separate dams.

For application in ridge crops a device with features as according to GB 2223654 has several drawbacks. It is an advantage in ridge crops for the forming of dams to be combined with an operation for forming ridges. Known devices which are the same as or related to the device as shown in GB 2223654 are relatively heavy, take up a relatively large amount of space and are therefore deemed less suitable for this application. For the forming of dams for ridge crops it is an advantage when the soil required for the purpose is taken substantially from the furrow and as little as possible from the flanks of a ridge. A drawback of devices as according to GB 2223654 is that the working depth of a paddle of the paddle wheel, i.e. the depth to which a paddle penetrates into the soil during the forward movement of the implement, depends on the soil resistance. The properties of the soil in a furrow can vary greatly, both within and between fields. The amount of soil made available per unit of displacement for the dam construction is hereby dependent on local soil properties. A further drawback of devices as according to GB 2223654 is that the adhesion of soil to the paddles of a paddle wheel can impede proper operation. The adhesion of soil can result in the soil dislodged by the paddle not being pushed forward and becoming available for the purpose of forming a dam but flowing away along the sides of the paddle.

A device according to the preamble of claim 1 is disclosed in US2193275.

The present invention has for its object, among others, to provide a device for forming dams for ridge crops which is highly suitable for application in combination with a ridge former and the effectiveness of which is largely independent of variation in soil properties, and the operation of which is not impeded by adhesion of soil to soil working members.

### Summary of the invention

A device of the above specified type is for this purpose characterized according to the invention in that the device comprises a frame with at least one holder which is mounted on the frame for pivoting about a pivot shaft and has attached thereto a soil working member for forming a dam, a crankshaft which is provided with at least one crank and is also provided with drive means, which crankshaft is held by the frame using bearing means, wherein the crank is coupled by means of a drive rod to the holder and which frame comprises coupling means for coupling the device to an implement intended for ridge cultivation, more particularly a ridge former, such that the outer end of the soil working member, during the intended use and with activated drive means, makes a substantially up and downward movement about the pivot shaft which is oriented perpendicularly of the travel direction and parallel to the ground surface. A first advantage of a device according to the invention is that the features result in a compact construction, whereby the device is readily suitable for combination with another implement such as a ridge former. A second advantage is that the soil working member is urged actively into the ground by the drive means, whereby the amount of soil which is pushed forward by the member during the intended use is relatively independent of the soil properties. A third advantage is that active and periodic penetration of the soil working member into the soil contributes toward release of adhering soil from the surface of the soil working member.

The device according to the invention is further characterized in that the arc length of the up and downward movement of the soil working outer end of the soil working member amounts to at least 0.15 m, whereby under usual practical conditions a sufficient quantity of soil is made available for the forming of a sufficiently high dam.

The invention is further characterized in that the frame comprises a plurality of holders, each intended for the purpose of working one furrow, which are coupled via respective drive rods to respective cranks on one central crankshaft, and that the respective cranks are distributed substantially uniformly around the shaft. A driving by means of one crankshaft results in a cost-effective driving. The uniform distribution of the cranks provides for a uniform load on the drive means. The chance of undesirable interaction with the implement with which the present invention forms a combination is thus also limited to a minimum. This is particularly important in the case the device is combined with a ridge former.

It is advantageous for the purpose of forming dams independently of travel speed that the drive means comprise a hydraulic motor with a continuously variable rotation speed.

In order to reduce the chance of damage by obstacles in the ground it is advantageous that the coupling means for attaching the frame to an implement intended for the ridge cultivation comprise a hinge and also spring means which counteract the rotation of the frame about the hinge.

### Brief description of the drawings

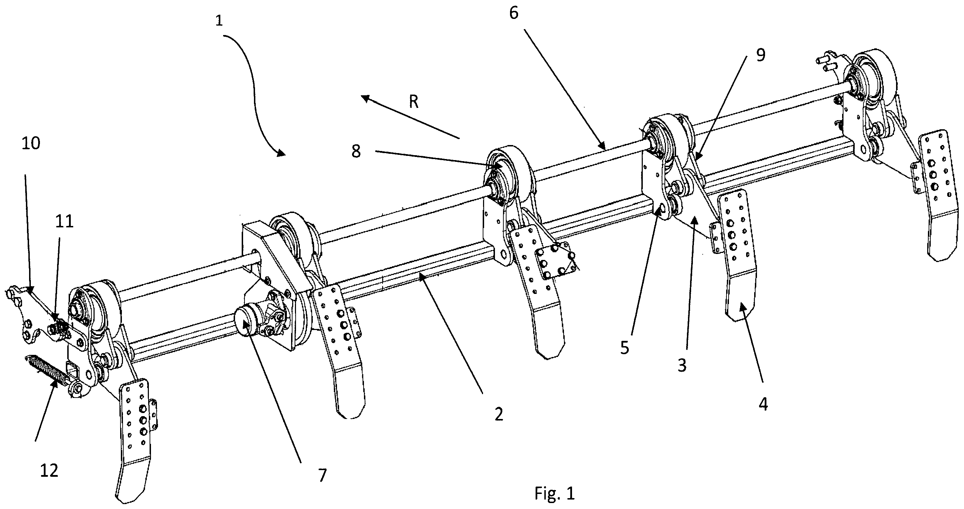

The invention is elucidated hereinbelow with reference to one figure. Figure 1 shows schematically herein a perspective view of an embodiment of the device according to the invention.

### Exemplary embodiment of a device according to the invention

The invention will be further elucidated hereinbelow by way of example with reference to one exemplary embodiment shown in the drawing. Figure 1 shows herein a device 1 which comprises a frame 2 which, according to the present embodiment, has five substantially identical holders 3. A holder 3 is intended for the purpose of holding a soil working member 4. The soil working member 4 is a wear part in the form of a cutting tool and is for this reason preferably mounted removably on a holder 3, for instance with known screw means. A holder 3 is mounted according to the invention on frame 2 for pivoting about a pivot shaft 5.

Frame 2 is further provided with a crankshaft 6, which is held using known bearing means, and with drive means 7. Each crank 8 of crankshaft 6 is coupled with respective drive rods 9 to a holder 3. A crank 8 and drive rod 9 are provided for this purpose with known co-acting bearing means. A holder 3 and a drive rod 9 are provided with likewise known co-acting hinge means, for instance in the form of a slide bearing. Drive means 7 preferably consist of a hydraulic motor with a continuously adjustable rotation speed.

The device according to the invention is particularly intended for combination with another implement for ridge cultivation, preferably a combination with an implement for forming ridges, i.e. a ridge former. A ridge former is an implement or a part of an implement with which ridges and furrows are formed from soil dislodged by a preceding ground working. For combination with a known ridge former the device according to the invention is provided with coupling means 10. These coupling means 10 preferably comprise a hinge 11 and spring means 12 which counteract the rotation of frame 2 about hinge 11. Coupling means 10 according to the present exemplary embodiment are intended for the purpose of reducing the chance of damage in situations where a soil working member 4 strikes an obstacle such as a stone.

The purpose of the operation with device 1 according to the invention is to form relatively small dams at relatively small mutual distances between the ridges for a ridge crop. Relatively small dams are preferred to relatively large dams as known in flat field row cultivation because the relatively small space between the ridges makes it more difficult to push soil forward between the ridges. Tests under practical conditions have taught that the forming of dams with a mutual distance in the order of 0.3 - 0.7 m and a height in the order of 0.05 - 0.15 m decreases the chance of erosion substantially. At said small mutual distance between successive dams the pushed-forward soil can be utilized efficiently to form a dam and the working depth can remain limited to a minimum. This is advantageous in limiting peak loads on the device and the associated wear. At usual travel speeds of 3.6 to 7.2 km/hour this requires a rotation speed of crankshaft 6 in the order of 2 - 4 rps.

Owing to the feature that cranks 8 are distributed uniformly around crankshaft 6, forces resulting from the soil resistance are equalized. The device according to the invention is hereby distinguished in positive sense from devices wherein soil working members penetrate simultaneously into the ground.

The invention is elucidated in the foregoing on the basis of one exemplary embodiment. In a second exemplary embodiment not shown in the drawing a drive rod 9 also functions as holder for a soil working member 4. In order to convert the rotating movement of crankshaft 6 to a substantially up and downward movement of soil working member 4, the drive rod 9 is provided in the second exemplary embodiment with a guide rod which couples drive rod 9 pivotally to frame 2.

## Claims

1. Device (1) for forming dams in furrows for ridge crops wherin the device (1) comprises a frame (2) with at least one holder (3) which is mounted on the frame (2) for pivoting about a pivot shaft (5) and has attached thereto a soil working member (4) for forming a dam, a crankshaft (6) which is provided with at least one crank (8) and is also provided with drive means (7), which crankshaft (6) is held by the frame (2) using bearing means and which frame (2) comprises coupling means (10) for coupling the device to an implement intended for ridge cultivation, more particularly a ridge former, such that the outer end of the soil working member (4), during the intended use and with activated drive means (7), makes a substantially up and downward movement about the pivot shaft (5) which is oriented perpendicularly of the travel direction (R) and parallel to the ground surface, **characterized in that** the crank (8) is coupled by means of a drive rod (9) to the holder (3) .

2. Device (1) as claimed in claim 1, **characterized in that** the arc length of the up and downward movement of the soil working outer end of the soil working member (4) amounts to at least 0.15 m.

3. Device (1) as claimed in claim 1 or 2, **characterized in that** the frame (2) comprises a plurality of holders (3) which are coupled via respective drive rods (9) to respective cranks (8) on one central crankshaft (6).

4. Device (1) as claimed in claim 3, **characterized in that** the respective cranks (8) are distributed substantially uniformly around the crankshaft (6).

5. Device (1) as claimed in any of the claims 1 - 4, **characterized in that** the drive means (7) comprise a hydraulic motor with a continuously variable rotation speed.

6. Device (1) as claimed in any of the claims 1 - 5, **characterized in that** the coupling means (10) for attaching the frame (2) to an implement intended for the ridge cultivation comprise a hinge (11) and also spring means (12) which counteract the rotation of the frame (2) about the hinge (11).

## Patentansprüche

1. Vorrichtung (1) zur Herstellung von Dämmen in Furchen für Dammkulturen, wobei die Vorrichtung (1) einen Rahmen (2) mit wenigstens einer Halterung (3), die an dem Rahmen (2) befestigt ist, um sich um eine Drehwelle (5) zu drehen, und an der ein Bodenbearbeitungselement (4) zur Herstellung eines Damms angebracht ist, und eine Kurbelstange (6) umfasst, die mit wenigstens einer Kurbel (8) versehen ist und außerdem mit Antriebsmitteln (7) versehen ist, wobei die Kurbelstange (6) mittels Lagerungsmitteln durch den Rahmen (2) gehalten ist, wobei der Rahmen (2) Kopplungsmittel (10) zum Koppeln der Vorrichtung an eine zum Dammanbau bestimmte Hilfseinrichtung, insbesondere eine Dammherstellungsvorrichtung, umfasst, und zwar auf eine solche Weise, dass das äußere Ende des Bodenbearbeitungselements (4) während dem bestimmungsgemäßen Gebrauch und mit den aktivierten Antriebsmitteln (7) eine im Wesentlichen nach oben und unten gerichtete Bewegung um die Drehwelle (5) ausführt, die rechtwinklig zu der Fahrtrichtung (R) und parallel zur Bodenfläche ausgerichtet ist, **dadurch gekennzeichnet, dass** die Kurbel (8) mit Hilfe einer Antriebsstange (9) an die Halterung (3) gekoppelt ist.

2. Vorrichtung (1) nach Anspruch 1, **dadurch gekennzeichnet, dass** die Bogenlänge der nach oben und unten gerichteten Bewegung des äußeren Bodenbearbeitungsendes des Bodenbearbeitungselements (4) wenigstens 0,15 m beträgt.

3. Vorrichtung (1) nach Anspruch 1 oder 2, **dadurch gekennzeichnet, dass** der Rahmen (2) eine Vielzahl von Halterungen (3) umfasst, die über entsprechende Antriebsstangen (9) an entsprechende Kurbeln (8) an einer zentralen Kurbelstange (6) gekoppelt sind.

4. Vorrichtung (1) nach Anspruch 3, **dadurch gekennzeichnet, dass** die entsprechenden Kurbeln (8) im Wesentlichen einheitlich um die Kurbelstange (6) verteilt sind.

5. Vorrichtung (1) nach einem der Ansprüche 1 bis 4, **dadurch gekennzeichnet, dass** die Antriebsmittel (7) einen Hydraulikmotor mit einer stufenlos einstellbaren Drehzahl umfassen.

6. Vorrichtung (1) nach einem der Ansprüche 1 bis 5, **dadurch gekennzeichnet, dass** die Kopplungsmittel (10) zum Anbringen des Rahmens (2) an eine zum Dammanbau bestimmte Hilfseinrichtung ein Gelenkstück (11) und zudem Federmittel (12) umfassen, die der Drehung des Rahmens (2) um das Gelenkstück (11) entgegenwirken.

## Revendications

1. Dispositif (1) pour former des barrages dans des sillons pour des cultures de crête, dans lequel le dispositif (1) comprend un cadre (2) présentant au moins un support (3) qui est monté sur le cadre (2) de manière à pivoter autour d'un axe de pivot (5) et présentant attaché à celui-ci un élément de travail de sol (4) pour former un barrage, un vilebrequin (6) qui est pourvu d'au moins une manivelle (8) et qui est également pourvu de moyens d'entraînement (7), ledit vilebrequin (6) étant maintenu par le cadre (2) en utilisant des moyens de palier, et ledit cadre (2) comprenant des moyens de couplage (10) pour coupler le dispositif à un équipement conçu pour la culture de crête, plus particulièrement un dispositif de formation de crêtes, de telle sorte que l'extrémité extérieure de l'élément de travail de sol (4), pendant l'utilisation prévue et avec des moyens d'entraînement activés (7), exécute un déplacement sensiblement vers le haut et vers le bas autour de l'axe de pivot (5) qui est orienté perpendiculairement à la direction de déplacement (R) et parallèlement à la surface du sol, **caractérisé en ce que** la manivelle (8) est couplée au moyen d'une bielle d'entraînement (9) au support (3).

2. Dispositif (1) selon la revendication 1, **caractérisé en ce que** la longueur d'arc du déplacement sensiblement vers le haut et vers le bas de l'extrémité extérieure de travail de sol de l'élément de travail de sol (4) est égale à au moins 0,15 m.

3. Dispositif (1) selon la revendication 1 ou 2, **caractérisé en ce que** le cadre (2) comprend une pluralité de supports (3) qui sont couplés par l'intermédiaire de bielles d'entraînement respectives (9) à des manivelles respectives (8) sur un vilebrequin central (6).

4. Dispositif (1) selon la revendication 3, **caractérisé en ce que** les manivelles respectives (8) sont distribuées sensiblement uniformément autour du vilebrequin (6).

5. Dispositif (1) selon l'une quelconque des revendications 1 à 4, **caractérisé en ce que** les moyens d'entraînement (7) comprennent un moteur hydraulique présentant une vitesse de rotation à variation continue.

6. Dispositif (1) selon l'une quelconque des revendications 1 à 5, **caractérisé en ce que** les moyens de couplage (10) pour attacher le cadre (2) à un équipement destiné à la culture de crête comprennent une charnière (11) et également des moyens de ressort (12) qui contrecarrent la rotation du cadre (2) autour de la charnière (11).
